# EUROPEAN PATENT SPECIFICATION

(11) **EP 0 340 857 B1**
(45) Date of publication and mention of the grant of the patent: **31.03.1993**
(21) Application number: 89201093.5
(22) Date of filing: 28.04.1989
(51) Int. Cl.: A23C 15/16, A23C 20/00, A23C 9/15

(54) **Edible and spreadable oil-in-water emulsion**
Essbare und streichfähige Öl-in-Wasser-Emulsion
Emulsion huile dans l'eau consommable et tartinable

(30) Priority: 02.05.1988 NL 8801149
(43) Date of publication of application: 08.11.1989
(73) Proprietor: FRIESLAND (FRICO DOMO) COÖPERATIE B.A., NL-8937 AC Leeuwarden (NL)
(72) Inventor: Bos, Bernard Cornelis, NL-9001 JJ Grouw (NL)
(74) Representative: van Gennip, Johannes Simeon Wilhelmus

(56) References cited:
- EP-A- 0 018 604
- EP-A- 0 256 712
- AU-A- 459 972
- FR-A- 2 261 713
- FR-A- 2 282 808
- FR-A- 2 580 471

## Description

The invention relates to an edible and spreadable oil-in-water emulsion on the basis of dairy materials.

Oil-in-water emulsions having a spreadable character on the basis of dairy materials are known. In general, the starting product is cheese in any form as a main material. The resulting product is known by the name of "cheese spread". A drawback of using cheese as a material is that additional process steps in the form of cheese making and ripening are required before one can proceed to the real preparation of the emulsion. Moreover, the resulting emulsions remain limited to products having a cheese-like character. By starting from more neutral materials, one can obtain a much more extensive assortment of spreadable food products.

Dutch patent application 6605933 discloses a method in which the total milk protein is precipitated from the milk by heating with addition of a Ca salt. The precipitated protein is separated, and after mixing with flavourings and fillers and while adding a melting salt it is heated to obtain a smooth structure. Depending on the additions butter- or cheese-like spreads or sweet or seasoned pastes are obtained. Although in this process the assortment of products has been increased, the drawback remains that at first an intermediate, in this case a Ca coprecipitate, is to be prepared.

FR-A-2 282 808 and FR-A-2 261 713 relate to the preparation of water-in-oil emulsions, rather than to oil-in-water emulsions according to the present invention.

In AU-A-459972 the preparation of hard cheese is described, whereas the emulsions as described in FR-A-2 580 471 and EP-A-0 256 712 contain binding agents such as starch derivatives and/or gelatin. In EP-A-0 018 604 spreads are described which have some similarity with those of the present invention. The latter however distinguish clearly by the specific incorporation of a high percentage of whey-protein concentrates, leading to superior - in particular organoleptic - properties.

It has now been found that a spreadable product having the desired characteristics can be obtained in a considerably easier way, starting from non-modified non-fat milk solids to which a whey-protein concentrate and a melting salt are added. The emulsion according to the invention is characterized by the following compositions:
Fat content 5-45 wt.%, preferably 15-45 wt.%. Solids content in the aqueous phase 15-50 wt.%, preferably 30-50 wt.%.

At least 30% of the solids of the aqueous phase consists of non-fat milk solids which is not different from the natural non-fat solids of milk or is different therefrom only as a result of lactic acid fermentation. The milk protein content of the aqueous phase is 8-20 wt.%.

At least 5 and not more than 50 wt.% and preferably 10-40 wt.% of the milk protein derives from whey-protein concentrate.

The emulsion contains 1-4 wt.% melting salts, expressed on the final product.

The fat content in the emulsion preferably ranges from 15 to 45 wt.%. When low-calory products are specifically desired, the fat content may be reduced to 5%, but this will result in some loss of flavour. Fat contents above 45% are not desirable, because it will decrease the emulsion character. Food products having such a high fat content can often more suitably be prepared as a water-in-oil emulsion.

The type of fat depends on the specific product. For butter- and cheese-like products milk fat is preferably used, although other types of fat are possible. For other types of spread a portion of the fat will often derive from additives, such as cocoa, nuts and the like. Besides, milk fat or other added fat may be present.

Milk fat may be added in the form of concentrated or unconcentrated or dried whole milk, cream, butter, anhydrous milk fat or mixtures thereof.

Fats other than milk fat, as far as not deriving from cocoa, nuts and the like, will usually be added as such.

The solids content of the aqueous phase is preferably 30-50 wt.%. At lower solids contents the emulsion will have a rather weak structure. Solids contents of not less than 15% are possible, however, in particular for products stored with cooling. At a solids content above 50% the emulsion will become too solid and too stiff and will no longer satisfy the criterion of good spreadability.

The composition of the solids of the aqueous phase is substantially decisive of the structure of the final product. It has been found that within certain limits of composition a combination of non-fat milk solids, whey-protein concentrate and melting salts will give products of the desired - in particular smooth and homogeneous - structure and good spreadability.

In the first place,the aqueous phase must contain 8-20 wt.% milk derived protein. Of this protein, 5-50 wt.% and preferably 10-40 wt.% must derive from whey protein concentrates, while the remaining portion derives from non-fat milk solids of normal composition. At a total milk protein content in the solids lower than 8 wt.% insufficient gelation will occur, at contents above 20% the gelation will be too strong and the spreadability will be lost.

At too low a proportion of whey-protein concentrate in the total milk protein too little gelation will also occur. Preferably, the proportion of added whey protein may not fall below 10%. Below 10% to a minimum of 5% good structures are still possible if structuring fillers, e.g. (coconut) fibres, are present.

If the proportion of the whey-protein concentrate in the total milk protein is more than 40%, the gel becomes too tough to be properly spreadable. Only in gels of high humidity a higher proportion of whey protein, up to 50%, may be useful.

The non-fat milk solids may be added in the form of concentrated or unconcentrated or dried whole milk, skim milk, cream or mixtures thereof. If this is necessary for the flavour of the final product, these materials may be fermented with lactic acid bacterial cultures conventional in the dairy industry.

All the other operations influencing the composition of the non-fat milk solids should, however, be omitted, as the formation of a gel having the correct spreadable structure is thereby disturbed.

The whey protein concentrates to be added have preferably been prepared through ultrafiltration and may be dried or not. Very suitable is a powdered whey protein concentrate prepared by means of ultrafiltration and drying, which concentrate contains about 60 wt.% protein. But concentrates having other protein contents or prepared in a different manner are also applicable.

In addition to the given amounts of proteins and milk constituents a small amount of a Ca salt should be present. Salts suitable therefor are commercially known by the name of "melting salts" and consist mainly of polyphosphates and citrates. A melting salt commercially sold by the firm of Benckiser-Knapsack GmbH under the name of JOHA S9D has proved very suitable for the purpose.

The suitable amount of melting salt is 1-4 wt.%, based on the final product. With less than 1% melting salt there is formed an elastically brittle gel having a poor spreadability. With more than 4% melting salt too much deliquescence and influence on the flavour occur.

In addition to the milk constituents and melting salts, other materials can be dissolved or dispersed in the aqueous phase, such as sugars, flavourings and colours, finely divided food products, such as cocoa, nuts, fine herbs and the like. In order to obtain the desired structure, however, a substantial portion of the solids of the aqueous phase must consist of the previously mentioned combination of milk solids, whey-protein concentrate and melting salt. It has been found that the solids of the aqueous phase must consist of non-fat milk solids to at least 30 wt.%. Besides, sufficient whey-protein concentrate must be present to satisfy the previously mentioned ratio between milk derived and whey derived protein.

The process according to the invention offers the advantage that commercially available normal materials can be started from. With respect to the known preparation of cheese spread this means that the complicated preparation of cheese as an intermediate product can be avoided and that the product assortment can be considerably extended and is no longer restricted to cheese-like products.

In Dutch patent application 66,05933, true, the product assortment is extended over process cheese, but the preparation of an intermediate, in this case a difficultly manageable wet curd, remains an important obstacle to application on a large scale.

The preparation of the products according to the invention is, however, very simple and only consists in mixing the materials, heating, homogenizing and cooling.

If required, in order to obtain a desired natural aroma, a milk liquid may be fermented by means of lactic acid bacteria before or after addition of other ingredients. The products according to the invention may be pasteurized and can then be stored for some weeks at 4-6°C. They may also be sterilized in through-flow and aseptically drawn off and can then be stored in closed packages for a long time at ambient temperature without changes occurring in the physical structure.

The invention particularly renders it possible to produce low-calory products having good flavour and structure. Butter-like products having a fat content of 25% or less and having excellent flavour and spreadability are possible without using synthetic emulsifiers.

These butter-like products having a low fat content additionally have the advantage over the known butter-like products having a low fat content on the basis of a water-in-oil emulsion that they contain considerably more protein and calcium, which are of great value from a nutritional viewpoint.

Also, spreadable products having a cheese-like character and a low caloric value can be easily prepared according to the process.

Moreover, spreadable products having other flavour types, especially sweet or seasoned flavours, can be produced according to the invention. Such products may be used, e.g., as a bread spread, but also different applications as foods are possible, e.g., as desserts, fillings of bakery products, garnishes of snacks and the like.

The invention will be illustrated with reference to the following examples.

### EXAMPLE 1

### The preparation of a "half butter" as a fresh product

40.0 kg cream with 40% fat is acidified with an aromatic butter starter to a pH of 5.60. Then there are added 12.8 kg water, 18.0 kg skim milk powder, 24.0 kg liquid butterfat, 1.2 kg melting salt JOHA S9D and 4.0 kg whey-protein concentrate (60% protein). This is properly mixed and pasteurized for 20 seconds at 90°C, followed by homogenization at 120 bar at the pasteurization temperature, and by cooling to 4-6°C.

Thus a very palatable and excellently spreadable product is obtained with 40% butterfat (half butter) having a limited shelf life of some weeks via the cooling line.

### EXAMPLE 2

### The preparation of a "half butter" having a long shelf life

The composition and the acidification are identical to those set forth in Example 1, but now the mixture is preheated to 70°C, homogenized at 120 bar and then sterilized for 40 seconds at 130°C, followed by cooling to 4-6°C.

Very suitable for the sterilization and cooling is a scraped heat exchanger. Then the product is drawn off aseptically and packed in plastic tubs.

There is thus obtained a product comparable to that of Example 1, which can be stored for a long time without cooling.

### EXAMPLE 3

### The preparation of a "quarter butter"

50.0 kg skim milk is acidified with an aromatic butter starter to a pH of 5.60. Then there are added: 9.0 kg water, 16.7 kg skim milk powder, 3.3 kg whey-protein concentrate, 20.0 kg butter oil, 1.0 kg JOHA S9D. There is properly mixed, followed by pasteurization, or sterilization, and homogenization, and then cooling.

Here, too, a palatable and excellently spreadable product is obtained with 20% butterfat (quarter butter).

### EXAMPLE 4

### The preparation of a spread having cheese flavour

16.7 kg skim milk powder is dissolved in 54.1 kg water. The resulting milk is pasteurized and cooled to 20°C. Then this milk is acidified with an aromatic butter starter to a pH of 5.60. Subsequently, 20.5 kg butter oil, 4.8 kg whey-protein concentrate (60%), 0.8 kg common salt, 2.1 kg melting salt JOHA S9D and 0.8 kg cheese flavour 2M-96486 of Naarden International are added and properly mixed.

There is heated, followed by homogenization at 100 bar and pasteurization or sterilization. After filling and cooling a palatable and spreadable product is obtained.

### EXAMPLE 5

### The preparation of a hazelnut paste

In 44.2 kg water are dissolved 15.4 kg skim milk powder, 2.4 kg whey-protein concentrate (60%), 8.7 kg butter oil, 13.5 kg sugar, 12.5 kg hazelnut paste, 1.4 kg melting salt JOHA S9D and 1.9 kg digested low-fat cocoa and vanilla flavour. This mixture is homogenized and pasteurized, or sterilized, and then cooled. The resulting product is excellently spreadable and has a good flavour, with the accent lying on the hazelnut flavour.

### EXAMPLE 6

### The preparation of a paste having coconut flavour

In 44.4 kg water are dissolved 20.0 kg skim milk powder, 1.6 kg whey-protein concentrate (60%), 7.0 kg sugar, 10.0 kg butter oil, 1.0 kg melting salt and 16.0 kg dried natural coconut. The coconut is best added largely in finely ground form and to a lesser extent in the form of fibres which may then be added after homogenization. The mix is heated, followed by homogenization at 100 bar, addition, if any, of the coconut fibres and pasteurization or sterilization of the whole in a scraped heat exchanger. After drawing off and cooling a palatable and spreadable product is obtained here, too.

### EXAMPLE 7

### The preparation of a low-calory spread having fruit flavour

10.8 kg skim milk powder is dissolved in 77.2 kg water. Then 5.4 kg whey-protein concentrate powder having a protein content of 75 wt.%, 1.0 kg melting salt JOHA S9D, 5 kg palm oil, 0.5 kg passion fruit powder and 0.1 kg Na cyclamate are added to the solution.

The ingredients are mixed and the mixture is homogenized, pasteurized and cooled to about 5°C.

The resulting product has a pleasant fruit flavour and is properly spreadable at refrigerator temperature.

## Claims

1. Edible and spreadable oil-in-water emulsion on the basis of dairy materials, comprising an aqueous phase and a fat phase, characterized in that
a) the fat content in the emulsion is 5-45 wt.% and the emulsion contains 1-4 wt.% melting salts;
b) the aqueous phase, which forms 95-55 wt.% of the mixture, has a solids content of 15-50 wt.%, calculated on the aqueous phase;
c) at least 30 wt.% of the solids content of the aqueous phase consists of non-fat milk solids;
d) the content of milk-derived protein in the aqueous phase is 8-20 wt.%, calculated on the aqueous phase;
e) at least 5 and no more than 50 wt.% of the milk-derived protein derives from whey-protein concentrates;
which emulsion is obtainable by thoroughly mixing the aqueous and fat phases, homogenizing, pasteurizing or sterilizing and cooling the resulting mixture.

2. Edible and spreadable emulsion as claimed in claim 1, characterized in that the fat content of the emulsion is 15-45 wt.%.

3. Edible and spreadable emulsion as claimed in claim 1, characterized in that the solids content of the aqueous phase is 30-50 wt.%.

4. Edible and spreadable emulsion as claimed in claim 1, characterized in that 10-40 wt.% of the milk derived protein derives from whey-protein concentrates.

## Patentansprüche

1. Eßbare und streichfähige Öl-in-Wasser-Emulsion auf der Grundlage von Molkereistoffen, umfassend eine wäßrige Phase und eine Fettphase, dadurch gekennzeichnet, daß
a) der Fettgehalt in der Emulsion 5 - 45 Gew.-% beträgt, und die Emulsion 1 - 4 Gew.-% Schmelzsalze enthält;
b) die wäßrige Phase, welche 95 - 55 Gew.-% der Mischung bildet, einen Feststoffgehalt von 15 - 50 Gew.-% auf der Grundlage der wäßrigen Phase hat;
c) mindestens 30 Gew.-% des Feststoffgehalts der wäßrigen Phase aus Nichtfettmilchfeststoffen bestehen;
d) der Gehalt des von Milch abstammenden Proteins in der wäßrigen Phase 8 bis 20 Gew.-%, bezogen auf die wäßrige Phase, beträgt;
e) mindestens 5 und nicht mehr als 50 Gew.-% des von Milch abstammenden Proteins von Molkeproteinkonzentraten abstammen;
wobei die Emulsion durch gründliches Mischen der wäßrigen und Fett-Phasen, Homogenisieren, Pasteurisieren oder Sterilisieren und Abkühlen der sich ergebenden Mischung erhältlich ist.

2. Eßbare und streichfähige Emulsion nach Anspruch 1, dadurch gekennzeichnet, daß der Fettgehalt der Emulsion 15 - 45 Gew.-% beträgt.

3. Eßbare und streichfähige Emulsion nach Anspruch 1, dadurch gekennzeichnet, daß der Feststoffgehalt der wäßrigen Phase 30 - 50 Gew.-% beträgt.

4. Eßbare und streichfähige Emulsion nach Anspruch 1, dadurch gekennzeichnet, daß 10 - 40 Gew.-% des von Milch abstammenden Proteins von Molkeproteinkonzentraten abstammen.

## Revendications

1. Emulsion d'huile dans l'eau, comestible et pâteuse, à base de produits laitiers, comprenant une phase aqueuse et une phase constituée de graisses, caractérisée en ce que:
a) la teneur en graisses dans l'émulsion est de 5-45 % en poids, l'émulsion contenant 1-4 % en poids de sels de fusion;
b) La phase aqueuse, qui forme 95-55 % en poids du mélange, présentent une teneur en solides de 15-50 % en poids, pourcentage calculé sur base du poids de la phase aqueuse;
c) au moins 30 % en poids de la teneur en solides de la phase aqueuse sont constitués de solides de lait dépourvus de graisses;
d) la teneur en protéines dérivées du lait dans la phase aqueuse est de 8-20 % en poids, pourcentage calculé sur base du poids de la phase aqueuse;
e) au moins 5 % en poids et au plus 50 % en poids de protéine dérivée du lait sont dérivés de concentrés de protéines de lait battu;
ladite émulsion pouvant être obtenue en mélangeant intimement la phase aqueuse et la phase constituée de grasses, et en homogénéisant, pasteurisant ou stérilisant et refroidissant le mélange obtenu.

2. Emulsion comestible et pâteuse selon la revendication 1, caractérisée en ce que la teneur en grasses de l'émulsion est de 15-45 % en poids.

3. Emulsion comestible et pâteuse selon la revendication 1, caractérisée en ce que la teneur en solides de la phase aqueuse est de 30-50 % en poids.

4. Emulsion comestible et pâteuse selon la revendication 1, caractérisée en ce que 10-40 % en poids de la protéine dérivée du lait est dérivée de concentrés de protéines de lait battu.
